# EUROPÄISCHE PATENTSCHRIFT

(11) **EP 2 435 788 B1**
(45) Veröffentlichungstag und Bekanntmachung des Hinweises auf die Patenterteilung: **06.07.2016**
(21) Anmeldenummer: 10721784.6
(22) Anmeldetag: 20.05.2010
(51) Int. Cl.: G01C 19/5747

(54) **MIKRO-GYROSKOP ZUR ERMITTLUNG VON ROTATIONSBEWEGUNGEN UM MINDESTENS EINE VON DREI SENKRECHT AUFEINANDERSTEHENDEN RAUMACHSEN**
MICROGYROSCOPE FOR DETERMINING ROTATIONAL MOTIONS ABOUT AT LEAST ONE OF THREE PERPENDICULAR SPATIAL AXES
MICROGYROSCOPE POUR DÉTERMINER DES MOUVEMENTS DE ROTATION AUTOUR DE L'UN AU MOINS DE TROIS AXES SPATIAUX PERPENDICULAIRES

(30) Priorität: 27.05.2009 DE 102009026511
(43) Veröffentlichungstag der Anmeldung: 04.04.2012
(73) Patentinhaber: Maxim Integrated GmbH, 8403 Lebring (AT)
(72) Erfinder: HAMMER, Hanno, A-8403 Graz-Lebring (AT)
(74) Vertreter: Bergmeier, Werner
(86) Internationale Anmeldenummer: PCT/EP2010/056959
(87) Internationale Veröffentlichungsnummer: WO 2010/136379

(56) Entgegenhaltungen:
- EP-A1- 1 832 841
- EP-A1- 2 339 293
- WO-A1-2006/034706
- DE-A1- 19 500 800
- DE-A1-102007 012 163
- DE-A1-102007 030 120
- DE-A1-102007 054 505

## Beschreibung

Die vorliegende Erfindung betrifft ein Mikro-Gyroskop zur Ermittlung von Rotationsbewegungen um mindestens eine von drei senkrecht aufeinanderstehenden Raumachsen x, y und/oder z mit einem Substrat, auf welchem mehrere parallel zur Ebene des Substrats in einer x-y-Ebene oszillierende Massen angeordnet sind, wobei einige der oszillierenden Massen mittels Federn und Ankern auf dem Substrat befestigt sind, mit Antriebselementen zur Aufrechterhaltung oszillierender Schwingungen der Massen, welche bei einer Rotation des Substrats um eine beliebige Raumachse Corioliskräften unterworfen sind, und mit Sensorelementen, um die Auslenkungen der Massen aufgrund der erzeugten Corioliskräfte zu erfassen.

Mikro-Gyroskope werden in der Regel zur Ermittlung einer Drehbewegung um eine Achse in einem orthogonalen x-y-z-Koordinatensystem verwendet. Um Drehbewegungen des Systems um jede der drei Achsen ermitteln zu können, sind daher drei derartige Mikro-Gyroskope erforderlich. Dies ist kostenintensiv und aufwändig in der Steuerung bzw. Auswertung der Daten.

Aus der TW 286201 BB ist ein dreiachsiges mikro-elektro-mechanisches (MEMS-) Gyroskop bekannt. Hierbei werden Massen, welche an einem zentralen Anker angeordnet sind, in eine oszillierende Drehbewegung versetzt. Die Massen sind auf einem Substrat angeordnet und werden bei einem Drehmoment um die x- oder y-Achse aufgrund einer hierbei auftretenden Corioliskraft um die y- bzw. x-Achse gekippt. Dies wird ermöglicht durch eine entsprechende Aufhängung dieser Antriebsmassen an dem Substrat. Bei einem Drehmoment um die z-Achse sind Teilmassen durch wiederum eine entsprechende Aufhängung dieser Teilmassen an den drehbar gelagerten Massen translatorisch auslenkbar. Sowohl die Kippbewegungen als auch die translatorische Bewegung kann mittels Sensoren erfasst werden und dient aufgrund ihrer Proportionalität zu der Drehbewegung des Substrats als Maß für die entsprechende Drehung um die x-, y- oder z-Achse. Die jeweiligen Auslenkungen sind jedoch nur sehr schwierig zu ermitteln.

Um ein dreidimensionales Gyroskop schaffen zu können, bei welchem Drehungen um alle drei Achsen festgestellt werden können, hat D. Wood et al. in dem Artikel "A monolithic silicon gyroscope capable of sensing about three axes simultaneously" 1996 ein Gyroskop vorgeschlagen, welches ringförmig um einen zentralen Anker angeordnete oszillierende Massen aufweist. Diese Massen sind in der Lage, sowohl Kipp- als auch Drehbewegungen aufgrund auftretender Corioliskräfte durchführen zu können. Nachteilig ist hierbei, dass die Fertigung eines solchen Sensors ebenso wie der Antrieb der bewegten Massen schwierig ist. Die Bewegungen der einzelnen Bestandteile des Sensors beeinflussen sich gegenseitig, so dass Messungen der Bewegung in x-, y- oder z-Richtung des Gyroskops keine ausreichende Genauigkeit liefern.

Aus der DE 10 2007 012 163 A1 ist ein Mikro-Gyroskop zur Ermittlung von Rotationsbewegungen um mindestens eine von drei senkrecht aufeinander stehenden Raumachsen x, y und z bekannt. Mehrere Massen sind parallel zur Ebene des Substrats in einer x-y-Ebene oszillierend angeordnet. Die Massen sind mittels eines Kopplungsbalkens, Federn und Ankern auf dem Substrat befestigt und mit Antriebselementen angetrieben. Das Substrat umgibt den Sensor rahmenartig und dient dort zur seitlichen Befestigung des Kopplungsbalkens und der Massen, die zusammen mit dem Kopplungsbalken oszillieren und angeregt durch Corioliskräfte ausgelenkt werden.

Die DE 10 2007 054 505 A1 offenbart ebenfalls ein entsprechendes Mikro-Gyroskop. Auch hier sind die oszillierenden Massen am äußeren Rand des Sensors mittels mehrerer Anker auf dem Substrat befestigt.

Grundsätzlich bekannt sind auch eindimensionale und zweidimensionale Gyroskope, welche Kipp- bzw. Drehbewegungen des Gyroskops nur um eine oder um zwei der drei Raumachsen x, y und z erfassen können. Für viele Anwendungen sind solche einfacheren Gyroskope ausreichend.

Aufgabe der vorliegenden Erfindung ist es, kompakt bauende und relativ einfach aufgebaute Mikro-Gyroskope zu schaffen, welche eine hohe Erfassungsgenauigkeit bezüglich ein, zwei oder drei Drehraten um die x-, y-und/oder z-Achse aufweisen.

Die vorliegende Aufgabe wird gelöst durch ein Mikro-Gyroskop mit den Merkmalen des Anspruches 1.

Das erfindungsgemäße Mikro-Gyroskop ist ein Mikro-Elektro-Mechanisches System (MEMS) und dient zur Ermittlung von Rotationsbewegungen um mindestens eine, in einer vorzugsweisen Ausbildung der Erfindung aber zwei oder drei von drei senkrecht aufeinanderstehende Raumachsen x, y und z. Auf einem Silikonsubstrat sind mehrere parallel zur Ebene des Substrats in einer x-y-Ebene oszillierende Massen angeordnet. Zumindest einige dieser oszillierenden Massen sind mittels Federn und Ankern auf dem Substrat befestigt. Antriebselemente dienen zur Aufrechterhaltung linear oszillierender Schwingungen dieser Massen. Bei einer Rotation des Substrats um eine vorbestimmte Raumachse entstehen Corioliskräfte, welche die Auslenkung der zugehörigen Massen in einer definierten Richtung bewirken. Diese Auslenkungen können mit Sensorelementen erfasst werden.

Sollen x- bzw. y-Drehraten erfasst werden, so können einige der oszillierenden Massen zusätzlich zur parallel zum Substrat verlaufenden Antriebsrichtung entlang der senkrecht auf dem Substrat stehenden z-Achse ausgelenkt werden,. Diejenigen dieser zusätzlich entlang der z-Achse auslenkbaren Massen, die zur Erfassung von Drehraten um die x-Achse konzipiert sind, werden im folgenden als x-Massen bezeichnet; analog werden diejenigen entlang der z-Achse auslenkbaren Massen, welche Drehungen des Substrats um die y-Achse erfassen sollen, y-Massen genannt. Wiederum andere der oszillierenden Massen sind z-Massen, die zusätzlich zu ihrer Antriebsrichtung in der x-y-Ebene senkrecht auf ihre jeweilige Antriebsrichtung, aber innerhalb der x-y-Ebene parallel zum Substrat auslenkbar sind, um eine Drehung des Gyroskops um die z-Achse zu erfassen.

Liegt demnach eine Drehrate um die x-Achse an, greifen an den x-Massen Coriolis-Kräftepaare an, welche zur oszillierenden gegenphasigen Auslenkung der x-Massen entlang der z-Achse führen. Die Erfassung von Drehraten um die y-Achse erfolgt analog und führt zu einer oszillierenden gegenphasigen Auslenkung der y-Massen entlang der z-Achse. Liegt eine Drehrate um die z-Achse an, wirken auf die z-Massen radial nach innen bzw. außen zeigende Kräfte. Die z-Massen werden hierdurch in eine entsprechende radiale Oszillationsbewegung gezwungen. Diese Bewegung kann ebenso wie die Bewegung der x- und der y-Massen mittels Sensorelementen erfasst werden. Je nach Ausführung des Gyroskops können alle der genannten Bewegungsrichtungen oder nur einzelne davon ermöglicht sein. Bei einer Ausführung als 3D-Gyroskop zur Erfassung von Drehraten um alle drei Achsen ist die Beweglichkeit der x-Massen in y-Richtung als Primärbewegung und in z-Richtung als Sekundärbewegung, der y-Massen in x-Richtung als Primärbewegung und in z-Richtung als Sekundärbewegung sowie der z-Massen in x- und/oder y-Richtung als Primärbewegung und entsprechend in y- und/oder x-Richtung als Sekundärbewegung durch eine geeignete Aufhängung der x-, y- und z-Massen ermöglicht.

Ist das Gyroskop dagegen als reines z-Gyroskop vorgesehen, so ist die Sekundärbeweglichkeit der x- und y-Massen unterdrückt. Die x- und die y-Massen sind derart an dem Substrat aufgehängt, dass nur ihre Primärbewegung zugelassen ist. Ausschließlich die z-Massen weisen eine Primärbewegung in x- und/oder y-Richtung und eine entsprechende Sekundärbewegung in y- und/oder x-Richtung auf, um eine z-Drehrate anzuzeigen.

Ist das Gyroskop in einer anderen Ausführung der Erfindung als zweidimensionales Gyroskop aufgebaut, das nur Drehraten um die x- und y-Achse erfassen soll, so weist das Gyroskop entweder keine z-Massen auf oder die eigenständige Beweglichkeit der z-Massen in x- bzw. y- Richtung ist blockiert oder wird nicht ausgewertet.

Weitere Möglichkeiten alternativer erfindungsgemäßer Gyroskope ergeben sich jeweils durch den Entfall der entsprechenden Masse bzw. deren Beweglichkeit in der nicht erforderlichen Richtung. So sind neben reinen z- auch reine x- oder reine y- Gyroskope oder x-y-, x-z- oder y-z-Gyroskope mit dem grundsätzlichen Aufbau der vorliegenden Erfindung ausführbar.

Die Sensorelemente erzeugen bei einer entsprechenden Anregung ein elektrisches Signal, welches proportional zur x-, y- oder z-Drehrate des Gyroskops ist. Die Sensorelemente können beispielsweise Plattenkondensatoren sein, welche an dem Substrat und den x- bzw. y- bzw. z-Massen angeordnet sind und durch eine Veränderung ihres Abstandes das elektrische Signal erzeugen. Grundsätzlich sind als Sensorelemente Vertikal- oder Horizontal-Kondensatoren bzw. -Elektroden möglich. Wesentlich ist, dass sich die Lageveränderung der einzelnen Elemente zueinander erfassen lässt. Dies erfolgt in der Regel dadurch, dass ein Teil der Plattenkondensatoren bzw. Kondensatorelektroden an dem Substrat stationär angeordnet ist, während der korrespondierende Teil hierzu an den beweglichen x-, y- oder z-Massen befestigt ist.

Erfindungsgemäß ist auf dem Substrat ein Zentralanker angeordnet. Die Massen sind um den Zentralanker herum angeordnet, wobei die x-Massen und die y-Massen mit dem Zentralanker und die z-Massen mit den x-Massen oder den y-Massen verbunden sind. Die x- und die y-Massen sind derart auf dem Substrat gelagert, dass sie linear und tangential um den Zentralanker antreibbar sind. Bei Verwendung von vier x- bzw. y-Massen sind jeweils zwei davon in x-Richtung als Primärbewegung antreibbar, die übrigen zwei Massen sind in y-Richtung antreibbar. Die Bewegungsrichtung verläuft vorzugsweise linear und parallel zur x- bzw. y-Achse; die relative Phase der einzelnen Komponenten ist hierbei so, dass die Gesamtheit der sich bewegenden Elemente eine lineare und tangentiale Bewegung um die z-Achse ausführt.

Durch die Anordnung der Massen um den Zentralanker herum und mit der Verbindung der Massen mit dem Zentralanker wird eine Stütz- und Koppelfunktion erreicht, welche das System wesentlich stabiler gegen Störeinflüsse macht als dies beim Stand der Technik der Fall ist. Einerseits wird durch die lineare und zum Zentralanker tangential ausgerichtete Antriebsbewegung ein unkomplizierter Antriebsmode geschaffen, der ein sehr gleichmäßiges oszillieren der Massen ermöglicht. Andererseits stützen sich die Massen an dem Zentralanker ab und können sich bei entsprechender Koppelung auch gegenseitig derart beeinflussen, dass sie nicht nur allein für sich, sondern auch in Bezug auf die anderen Massen sehr gleichmäßig und ohne wesentliche Abweichungen voneinander angetrieben werden können. Dies ermöglicht die Schaffung eines sehr präzise arbeitenden Sensors. Die Stützwirkung des Zentralankers bewirkt auf die Massen darüber hinaus, dass parasitäre Einflüsse, wie zum Beispiel Stöße auf den Sensor, nicht zu Messfehlern führen. Ohne die Stützwirkung könnten Stöße zu einem ungewollten sogenannten Butterfly-Mode führen, bei dem die Massen wie der Flügelschlag eines Schmetterlings aus der x-y-Ebene heraus bewegt werden und sogar zur Zerstörung des Sensors führen könnten.

Die erfindungsgemäße Ausbildung der oszillierenden Massen und deren Primär- und Sekundärbewegungen ermöglichen einen relativ einfachen Aufbau des Mikro-Gyroskops. Insbesondere sind die Sekundärbewegungen sehr eindeutig, so dass die Sekundärbewegungen der Massen durch die ihnen zugeordneten Sensorelemente eindeutig einer x-, y- oder z-Drehrate zuordenbar sind. Die elektrischen Signale der Sensorelemente sind hierdurch zuverlässig und mit hoher Genauigkeit auswertbar.

In einer bevorzugten Ausführung der Erfindung sind die x-Massen und/oder die y-Massen als Sensorplatten ausgestaltet. Die Sensorplatten haben eine flächige Erstreckung in der x-y-Ebene parallel zum Substrat und eine relativ große Masse. Bei einer x-Drehrate oder einer y-Drehrate werden sie in z-Richtung ausgelenkt. Bei der Auslenkung bleiben sie in einer bevorzugten Ausführung weitgehend parallel zur x-y-Ebene. Lediglich der Abstand zur Ebene des Substrats ändert sich bei der Auslenkung in z-Richtung.

In einer vorteilhaften Ausführung der Erfindung sind die z-Massen als Rahmen ausgebildet. Sie werden zusammen mit den x- bzw. den y-Massen in der jeweiligen Primärbewegungsrichtung der x- bzw. y-Masse, auf welcher sie angeordnet sind, bewegt. Beim Auftreten einer z-Drehrate werden sie senkrecht zur jeweiligen Antriebsrichtung in der x-y-Ebene ausgelenkt. Durch die rahmenartige Gestaltung der z-Masse ist die Anordnung von Sensorelementen, welche die Auslenkung senkrecht zu ihrer Primärantriebsrichtung feststellen, relativ einfach möglich. Die feststehenden Sensorelemente sind dabei innerhalb des Rahmens angeordnet. Die Abstandsänderung des Rahmens zu den feststehenden Elementen kann einfach erfasst werden. Ist das Gyroskop als zweidimensionales Gyroskop ausgebildet, das nur Drehraten in x- und in y- Richtung erfassen soll, so können die z-Massen entfallen, d.h., dass das Gyroskop keine z-Massen aufweist.

Um eine kompakte Bauweise des Mikro-Gyroskops zu erhalten, ist es vorteilhaft, wenn die x-, y- und/oder z-Massen einen im Wesentlichen rechteckigen Grundriss aufweisen. Sie können hierdurch so versetzt zueinander in der x-y-Ebene auf dem Substrat angeordnet werden, dass sie einerseits genügend Bewegungsfreiheit für die Primär- und die Sekundärbewegungen haben und andererseits eine geringe Gesamtfläche einnehmen. Der unbenützte Freiraum innerhalb des Mikro-Gyroskops kann hierdurch sehr gering gehalten werden. Das gesamte Mikro-Gyroskop baut damit sehr klein.

Um eine stabile Halterung der x- und der y-Massen zu bekommen, sind Fixierungsanker und Antriebsfedern auf dem Substrat angeordnet. Die x- und die y-Massen sind über die Antriebsfedern an dem Fixierungsanker befestigt. Die x- und y-Massen sind hierdurch mit einem vorbestimmten Abstand von dem Substrat in der x-y-Ebene angeordnet. Die Primärbewegung der x-Massen verläuft gegenphasig in y-Richtung. Die Sekundärbewegung erfolgt gegenphasig in z-Richtung, wodurch eine x-Drehrate erfasst wird. Die Antriebsfedern der x-Massen sind daher vorzugsweise so ausgelegt, dass sie in y-Richtung und in z-Richtung eine kontrollierbare Steifheit bzw. Nachgiebigkeit aufweisen, in x-Richtung hingegen kaum nachgeben können. Hierdurch kann der Widerstand der Antriebsfedern gegenüber einer Auslenkung der x-Massen in Primär- und Sekundärrichtung wie gewünscht dosiert werden.

Analog hierzu sind die Antriebsfedern der y-Massen derart ausgelegt, dass sie in x- und in z-Richtung kontrollierbare Steifheit bzw. Nachgiebigkeit aufweisen, in y-Richtung hingegen kaum nachgeben. Das Gyroskop kann dadurch y-Drehraten erfassen. Die Primärbewegungsrichtung der y-Massen verläuft gegenphasig in x-Richtung, deren Sekundärbewegung gegenphasig in z-Richtung. Sowohl für den Antrieb als auch für die Drehratenerfassung sind die Antriebsfedern für die y-Massen somit relativ weich ausgelegt und bieten wenig Widerstand. In y-Richtung hingegen soll die Lage der y-Massen relativ unveränderlich sein. Deshalb sind die Antriebsfedern in dieser Richtung steif ausgebildet.

Soll das Mikro-Gyroskop beispielsweise als reines z-Gyroskop ausgebildet sein, so ist es vorteilhaft, wenn x- und die y-Massen keine Sekundärbeweglichkeit aufweisen. Die Antriebsfedern der x-Massen sind dann derart ausgelegt, dass sie in y-Richtung eine kontrollierbare Nachgiebigkeit aufweisen und in z- und in x-Richtung kaum nachgeben. Das Gyroskop kann damit keine x-Drehraten erfassen. Um auch keine y-Drehraten erfassen zu können, ist es vorteilhaft, wenn die Antriebsfedern der y-Massen derart ausgelegt sind, dass sie in x-Richtung eine kontrollierbare Nachgiebigkeit aufweisen und in y- und in z-Richtung kaum nachgeben.

Um eine stabile Lagerung der x- und der y-Massen auf dem Substrat zu erhalten, ist vorzugsweise vorgesehen, dass sie jeweils mittels einer äußeren und einer inneren Antriebsfeder gehalten werden. Die äußere Antriebsfeder ist dabei dem Rand des Mikro-Gyroskops zugewandt, während die innere Antriebsfeder der benachbarten Masse zugewandt ist. Durch Form und Breite der Antriebsfedern können die Resonanzfrequenzen der Antriebs- und der x- bzw. y-Drehraten-Erfassungsmoden eingestellt werden.

Wenn das Gyroskop x- bzw. y-Drehraten erfassen soll, ist es vorteilhaft, wenn die äußeren und die inneren Antriebsfedern mit einer kontrollierbaren Nachgiebigkeit in z-Richtung an der x- bzw. y-Masse angeordnet sind. Die Auslenkung der x- bzw. y-Masse in z-Richtung als Sekundärbewegung wird hierdurch unterstützt.

Sollen lediglich z-Drehraten mittels des Gyroskops erfasst werden, so ist es vorteilhaft, wenn die äußeren und die inneren Antriebsfedern kaum nachgiebig in z-Richtung an der x- bzw. y-Masse angeordnet sind. Die steife Anordnung bewirkt, dass die x- und y- Massen weitgehend in der x-y-Ebene verbleiben und nicht ausgelenkt werden.

Weisen in einer vorzugsweisen Ausbildung der Erfindung die äußere und die innere Antriebsfeder unterschiedliche Längen auf, so kann dies vorteilhaft sein, um schiefe Kippachsen in der x-Drehraten- oder der y-Drehraten-Erfassung auszugleichen. Dadurch kann erreicht werden, dass die x- bzw. y-Massen, die im Zuge der Erfassung einer x- bzw. y-Drehrate entlang der z-Achse ausgelenkt werden, immer weitgehend parallel zur x-y-Ebene und somit parallel zum Substrat orientiert bleiben.

Der Antrieb der x- und der y-Massen erfolgt vorzugsweise mittels Kammelektroden. Ein Teil der Kammelektroden ist dabei stationär auf dem Substrat befestigt, während der korrespondierende Teil der Kammelektroden an den x-bzw. den y-Massen befestigt ist. Durch das Anlegen einer Wechselspannung werden die x- bzw. die y-Massen wechselweise angezogen, wodurch die oszillierende Primärbewegung erzeugt wird.

In einer vorteilhaften Ausgestaltung der Erfindung sind die x-Massen in y-Richtung und die y-Massen in x-Richtung ausgerichtet und angetrieben. Insbesondere bei einem rechteckigen Grundriss der x-Massen bzw. der y-Massen kann durch eine 90°-Drehung der y-Massen und entsprechend versetzter Montage ein nahezu quadratischer Gesamtgrundriss des Mikro-Gyroskops erhalten werden. Dies sorgt für eine sehr kompakte und kleine Bauweise des Mikro-Gyroskops.

Sind zwei x-Massen und zwei y-Massen abwechselnd um den Zentralanker herum angeordnet, so entsteht hierdurch auch ein wünschenswertes Gleichgewicht bei Antrieb und Erfassung von x- oder y-Drehraten in folgendem Sinne: Parasitäre Drehmomente, welche um den Anker bei einer ungleichmäßigen Auslenkung oder einem ungleichmäßigen Antrieb der x- bzw. y-Massen entstehen könnten, werden hierdurch weitgehend neutralisiert. Das Mikro-Gyroskop ist dadurch ausbalanciert und die entsprechenden Drehraten können frei von Störeinflüssen festgestellt werden.

Sind die x- und die y-Massen jeweils mittels einer Koppelfeder an einer Zentralfeder angeordnet, so existiert eine gemeinsame, synchrone Schwingungsform dieser Massen im Sinne der Antriebsbewegung um den Zentralanker herum. Dies ist insbesondere dann der Fall, wenn die Zentralfeder an dem Zentralanker befestigt und um diesen herum in der x-y-Ebene drehbar ausgebildet ist. Durch die Koppelfedern können alle vier x- bzw. y-Massen synchron angetrieben werden und weisen eine gemeinsame Resonanzfrequenz auf. Dies ist vorteilhaft für eine genaue und gleichbleibende Erfassung auftretender Drehraten.

Die Zentralfeder beeinflusst die Antriebsresonanzfrequenz, allerdings in der Regel nur schwach. Sie verhindert in erster Linie, dass äußere Schockimpulse, welche entlang der z-Achse auf die Sensorstruktur eingeleitet werden, die x- bzw. y-Massen allzuleicht auf dem Substrat aufschlagen lassen. Ihre zweite Aufgabe ist, über die Koppelfedern die Antriebsbewegungen der x- bzw. y-Massen so zu synchronisieren, dass diese letzteren in ihrer Gesamtheit eine einzelne, gemeinsame Resonanzfrequenz, an der gewünschten Antriebsfrequenz, realisieren.

In einer besonders vorteilhaften Ausführung sind die Koppelfedern in ihrer Gesamtheit spiralig ausgebildet. In tangentialer Richtung ist eine Koppelfeder vorzugsweise steif, um Kopplungskräfte in dieser Richtung zu übertragen. In radialer Richtung ist sie hingegen weich ausgebildet, um Verzerrungskräfte auf die x- bzw. y-Masse zu vermeiden. Hierdurch wird vorteilhafterweise sichergestellt, dass die x- bzw. y- Masse beim Antrieb ebenso wie bei der Sekundärbewegung zum Erfassen einer Drehrate weitgehend widerstandfrei und dennoch synchron bewegt werden kann. Wären die Widerstände durch die Koppelfedern zu groß, so wäre zu befürchten, dass sich die x- bzw. y-Massen verziehen könnten, was sich unvorteilhaft auf die Erfassung von Drehraten um die z-Achse auswirken würde.

In einer besonders bevorzugten Ausführung der Erfindung ist jeweils eine z-Masse an jeweils einer x- bzw. einer y-Masse angeordnet. Jede x- bzw. jede y-Masse weist somit eine z-Masse auf. Die Primärbewegung der z-Masse erfolgt zusammen mit der x- bzw. der y-Masse in y- bzw. x-Richtung. Durch das Auftreten einer z-Rotation des Mikro-Gyroskops werden die z-Massen senkrecht zur Richtung ihrer Primärbewegung und parallel zum Substrat ausgelenkt. Ist die Primärbewegung der z-Masse in x-Richtung, so wird die Auslenkung der z-Masse in y-Richtung erfolgen. Befindet sich die z-Masse an einer x-Masse angeordnet, deren Primärbewegung in y-Richtung erfolgt, so wird die Corioliskraft, welche auf eine z-Drehrate hinweist, die z-Masse in x-Richtung auslenken. Aufgrund der durch die Kopplungsfedern synchronisierten Antriebsschwingungsform der x- bzw. y-Massen, welche spiralartigrotatorisch um die z-Achse erfolgt, sind auch die Phasen der Auslenkungen der z-Massen beim Erfassen einer Drehung des Gyroskops um die z-Achse so synchronisiert, dass sie gemeinsam in der x-y-Ebene und radial zur z-Achse nach innen bzw. außen schwingen.

Um eine entsprechende Elastizität für die Auslenkung der z-Massen in der zur Erfassung einer z-Drehrate relevanten Sekundärbewegung zu erhalten, die z-Masse aber dennoch in der Primärrichtung stark mit der x- bzw. y-Masse zu verbinden, sind Federn vorgesehen, die über einen Verbindungsbalkenansatz im Wesentlichen mittig mit der x- bzw. y-Masse verbunden sind. Hierdurch wird vermieden, dass die Federn direkt an der x- bzw. der y-Masse ansetzen, was für eine Entkopplung der z-Drehratenerfassung von der Primärbewegung vorteilhaft ist. Eine derartige Befestigung der z-Masse an der x- bzw. y-Masse ist auch dann vorteilhaft, wenn das Mikro-Gyroskop anders hier beansprucht aufgebaut ist.

Besonders vorteilhaft ist es, wenn die Verbindung des Balkenansatzes mit der x- bzw. y-Masse und der Fixierungsanker der x- bzw. y-Masse miteinander fluchtend angeordnet sind. Verspannungen, welche aufgrund von Verformungen der x- bzw. y-Masse auftreten könnten, werden hierdurch besonders gering gehalten.

Die Sekundärbewegung der z-Massen wird erfindungsgemäß festgelegt, indem die der x-Masse zugeordneten Federn in x-Richtung eine kontrollierbare Nachgiebigkeit aufweisen, d.h. kontrolliert weich sind und in y- und in z-Richtung kaum nachgeben, d.h. weitgehend steif ausgebildet sind. Dementsprechend ist es ebenso vorteilhaft, wenn die der y-Masse zugeordneten Federn in y-Richtung kontrolliert nachgiebig bzw. weich und in x- und z-Richtung kaum nachgeben, d.h. im Wesentlichen steif ausgebildet sind. Hierdurch wird bewirkt, dass die z-Masse in der Primärrichtung zusammen mit der x- bzw. der y-Masse synchron bewegt wird und sich gegebenenfalls auch bei einer Auslenkung der x- bzw. y-Masse in deren Sekundärrichtung zusammen mit der x- bzw. y-Masse bewegt. Beim Auftreten einer z-Drehrate hingegen löst sich die z-Masse von der gemeinsamen Bewegung mit der x- bzw. y-Masse und weicht in x- bzw. y-Richtung aus, je nachdem, in welche Richtung die Primärbewegung erfolgte.

Ist ein erfindungsgemäßes Gyroskop als z-Gyroskop ausgebildet, um ausschließlich z-Drehraten zu erfassen, so sind vorzugsweise die Antriebsfedern der x-Massen derart ausgelegt, dass sie in y-Richtung eine kontrollierbare Nachgiebigkeit aufweisen und in z- und in x-Richtung kaum nachgeben. Die Antriebsfedern der y-Massen sind derart ausgelegt, dass sie in x-Richtung eine kontrollierbare Nachgiebigkeit aufweisen und in y- und in z-Richtung kaum nachgeben. Die den x-Massen zugeordneten Verbindungsfedern weisen in x-Richtung eine kontrollierbare Nachgiebigkeit auf und geben in y- und z-Richtung kaum nach und die den y-Massen zugeordneten Verbindungsfedern weisen in y-Richtung eine kontrollierbare Nachgiebigkeit auf und geben in x- und z-Richtung kaum nach. Damit wird bewirkt, dass die x- und die y-Massen aufgrund von Drehraten um die x- bzw. y-Achse nicht auf die auftretende Corioliskraft mit einer Auslenkung reagieren können, da sie relativ starr gegenüber Kräften in der jeweiligen Richtung gelagert sind. Nur die z-Masse wird ausgelenkt und kann auf eine z-Drehrate des Gyroskops durch eine Sekundärbewegung in x- bzw. y-Richtung innerhalb der x-y-Ebene reagieren. Der z-Masse zugeordnete Sensorelemente erfassen diese Auslenkung.

Ist das Gyroskop als 3D-Gyroskop ausgebildet, um Drehraten um die x-, y- und die z-Achse zu erfassen, so sind die Antriebsfedern der x-Massen derart ausgelegt, dass sie in y- und in z-Richtung eine kontrollierbare Nachgiebigkeit aufweisen und in x-Richtung hingegen kaum nachgeben. Die Antriebsfedern der y-Massen sind dabei derart ausgelegt, dass sie in x- und in z-Richtung eine kontrollierbare Nachgiebigkeit aufweisen und in y-Richtung hingegen kaum nachgeben. Die den x-Massen zugeordneten Verbindungsfedern weisen in x-Richtung eine kontrollierbare Nachgiebigkeit auf und geben in y- und z-Richtung kaum nach. Die den y-Massen zugeordneten Verbindungsfedern weisen in y-Richtung eine kontrollierbare Nachgiebigkeit auf und in x- und z-Richtung geben sie kaum nach. Alle der x-, y- und z-Massen können somit durch eine auftretende Corioliskraft in ihren Sekundärrichtungen bewegt werden. Die Bewegungen werden von zugeordneten Sensorelementen erfasst.

Ist ein erfindungsgemäßes Gyroskop als 2D-Gyroskop ausgebildet, um Drehraten um die x- und die y-Achse zu erfassen, so sind die Beweglichkeiten der x- und der y-Massen ebenso wie in dem 3D-Gyroskop vorgesehen. Die z-Masse hingegen ist aber entweder in ihrer Beweglichkeit in der x-y-Ebene quer zur Primärbewegung blockiert oder aber es wird vollständig auf die z-Massen in dem entsprechenden Gyroskop verzichtet. Das Gyroskop ist hierdurch einfacher in seinem Aufbau, da sowohl die z-Massen als auch die zugehörigen Federn nicht erforderlich sind.

Eine besonders vorteilhafte Ausführung eines 3D-Gyroskops gemäß der Erfindung ist im Folgenden beschrieben:
Vermittels der Antriebskämme werden die x- bzw. y-Massen in die Antriebs-bewegungsform versetzt. In dieser oszillieren die x- und y-Massen mit der Frequenz der Antriebsspannung synchron in tangentialer Richtung bezüglich des durch die Koppelfedern beschriebenen Kreises. Ohne die Koppelfedern könnten sich alle vier x- bzw. y-Massen unabhängig voneinander bewegen. Obwohl durch eine gemeinsame Antriebsspannung angeregt, würden unvermeidliche Fertigungstoleranzen an den Federn dazu führen, dass die Antriebs-Resonanzfrequenzen der vier Massen leicht verschieden wären, was zu unterschiedlichen Anregungsamplituden und leicht verschobenen Phasen der Antriebsbewegung führen müßte. Durch die Anwesenheit der Koppelfedern wird eine einzige, gemeinsame Antriebs-Resonanzfrequenz realisiert, bei welcher alle Massen in Phase und mit gleicher Amplitude schwingen.

Liegt eine Drehrate Ω um die x-Achse an, greifen an den x-Massen Corioliskräfte an, welche proportional zum Kreuzprodukt v x Ω sind, wobei v die Geschwindigkeit der jeweiligen Masse darstellt. Diese Kräfte führen zu oszillierenden gegenphasigen Auslenkungen der Platten, welche die x-Massen bilden, entlang der z-Achse. Die Platten bilden zusammen mit darunter befindlichen, statisch auf dem Siliziumsubstrat aufliegenden, leitenden Flächen Plattenkondensatoren, durch welche die Erfassungsbewegung in ein elektrisches Signal umgewandelt wird.

Die Erfassung von Drehraten um die y-Achse erfolgt analog und führt zur oszillierenden gegenphasigen Auslenkung der Platten, welche die y-Massen bilden.

Liegt eine Drehrate um die z-Achse an, wirken auf die z-Massen radial nach innen/außen zeigende Kräfte. Die Rahmen werden dann in die Bewegungsform der z-Erfassungs-Mode gezwungen. Die vertikalen Flächen der Aussparungen in den z-Massen bilden die sich bewegenden Hälften von Plattenkondensatoren, deren statische Hälften sich innerhalb der Aussparungen befinden.

Ohne Zentralfedern würde das Gyroskop parasitäre Eigenschwingungen aufweisen, bei welchen sich die Platten, durch die Koppelfedern verbunden, synchron entlang der z-Achse auf und ab bewegen. Dadurch wäre ein Aufschlagen der Sensorstruktur am Substrat bei Einwirkung eines Stoßes entlang der z-Achse schwer zu vermeiden. Die Anwesenheit der Zentralfedern eliminiert diese Eigenschwingungsform vollständig.

Die spiralige Ausformung der Koppelfedern bewirkt, dass Kopplungskräfte im Wesentlichen nur in tangentialer Richtung, bezogen auf die zentrale, kreisförmige Koppelfeder, übertragen werden. Insbesondere sind diese Federn extrem weich in radialer Richtung. Zusammen mit der Tatsache, dass ihr Ausgangspunkt an der inneren Antriebsfeder liegt, werden so Verzerrungskräfte, die in der Antriebsbewegung radial von innen auf die Platten wirken würden, weitgehend vermieden. Solche Verzerrungen könnten sich sonst in weiterer Folge auf die Federn, welche die z-Masse innerhalb der x- bzw. y-Massen halten, übertragen und damit das Signal zur Erfassung von z-Drehraten negativ beeinflussen.

Die Federn, welche die z-Massen mit den x- bzw. y-Massen verbinden, setzen an einem Balken an, welcher die Verbindung mit den x- bzw. y-Massen mittig herstellt. Diese Maßnahme dient dem noch weitergehenden Schutz der Verbindungsfedern gegen Beulungen, dem sog. "buckling" und den damit verbundenen Störungen der Erfassung von z-Drehraten.

Eine besonders vorteilhafte Ausführung eines 2D-Gyroskops zur Erfassung von Drehraten um die x- und y-Achse gemäß der Erfindung ist im Folgenden beschrieben:
Vermittels Antriebskämme werden die Sensorplatten, d.h. die x- und die y-Massen, in die Antriebs-Bewegungsform versetzt. In dieser oszillieren die Sensorplatten mit der Frequenz der Antriebsspannung in tangentialer Richtung bezüglich des durch die Kopplungsfedern beschriebenen Kreises. Ohne Koppelfedern könnten sich alle vier Platten unabhängig voneinander bewegen. Obwohl durch eine gemeinsame Antriebsspannung angeregt, würden unvermeidliche Fertigungstoleranzen an den Federn dazu führen, dass die Antriebs-Resonanzfrequenzen der vier Platten leicht verschieden wären, was zu unterschiedlichen Anregungsamplituden und leicht verschobenen Phasen der Antriebsbewegung führen müßte. Durch die Anwesenheit der Koppelfedern wird eine einzige, gemeinsame Antriebs-Resonanzfrequenz realisiert, bei welcher alle Platten in Phase und mit gleicher Amplitude schwingen. Liegt eine Drehrate Ω um die x-Achse an, greifen an den Platten Coriolis-Kräfte an, welche proportional zum Kreuzprodukt v x Ω sind, wobei v die Geschwindigkeit der jeweiligen Platte darstellt. Diese Kräfte führen zur oszillierenden gegenphasigen Auslenkung der linken oberen und rechten unteren Platte entlang der z-Achse. Die Platten bilden zusammen mit darunter befindlichen, statisch auf dem Siliziumsubstrat aufliegenden, leitenden Flächen Plattenkondensatoren, durch welche die Erfassungsbewegung in ein elektrisches Signal umgewandelt wird.

Die Erfassung von Drehraten um die y-Achse erfolgt analog und führt zur oszillierenden gegenphasigen Auslenkung der linken unteren und rechten oberen Platte.

Ohne die vorteilhaften Zentralfedern läge die Resonanz der "butterfly"-Mode, bei welcher sich die Platten, durch die Koppelfedern verbunden, entlang der z-Achse auf und ab bewegen, bei sehr niedrigen Frequenzen, ca. 5 kHz. Dadurch wäre ein Aufschlagen der Sensorstruktur am Substrat bei Einwirkung einer Stoßes entlang der z-Achse schwer zu vermeiden. Die Anwesenheit der Zentralfedern eliminiert diese Mode vollständig. Die spiralige Ausformung der Koppelfedern bewirkt, dass Kopplungskräfte im Wesentlichen nur in tangentialer Richtung, bezogen auf die zentrale kreisförmige Koppelfeder, übertragen werden. Insbesondere sind diese Federn extrem weich in radialer Richtung.

Weitere Vorteile der vorliegenden Erfindung sind in den nachfolgenden Ausführungsbeispielen beschrieben. Es zeigt:
- **Figur 1**: eine Draufsicht auf ein erfindungsgemäßes 3D-Mikro-Gyroskop,
- **Figur 2**: die Primärbewegung des Mikro-Gyroskops gemäß Figur 1,
- **Figur 3**: die Erfassung einer x-Drehrate des Gyroskops gemäß Figur 1,
- **Figur 4**: die Erfassung einer y-Drehrate des Gyroskops gemäß Figur 1,
- **Figur 5**: die Erfassung einer z-Drehrate des Gyroskops gemäß Figur 1,
- **Figur 6**: eine Draufsicht auf ein erfindungsgemäßes z-Mikro-Gyroskop,
- **Figur 7**: die Primärbewegung des Mikro-Gyroskops gemäß Figur 6,
- **Figur 8**: die Erfassung einer z-Drehrate des Gyroskops gemäß Figur 6,
- **Figur 9**: eine Draufsicht auf die Primärbewegung eines erfindungsgemäßen x-y-Mikro-Gyroskops,
- **Figur 10**: das Mikro-Gyroskop gemäß Figur 9 mit der Erfassung einer x-Drehrate und
- **Figur 11**: das Mikro-Gyroskop gemäß Figur 9 mit der Erfassung einer y-Drehrate.

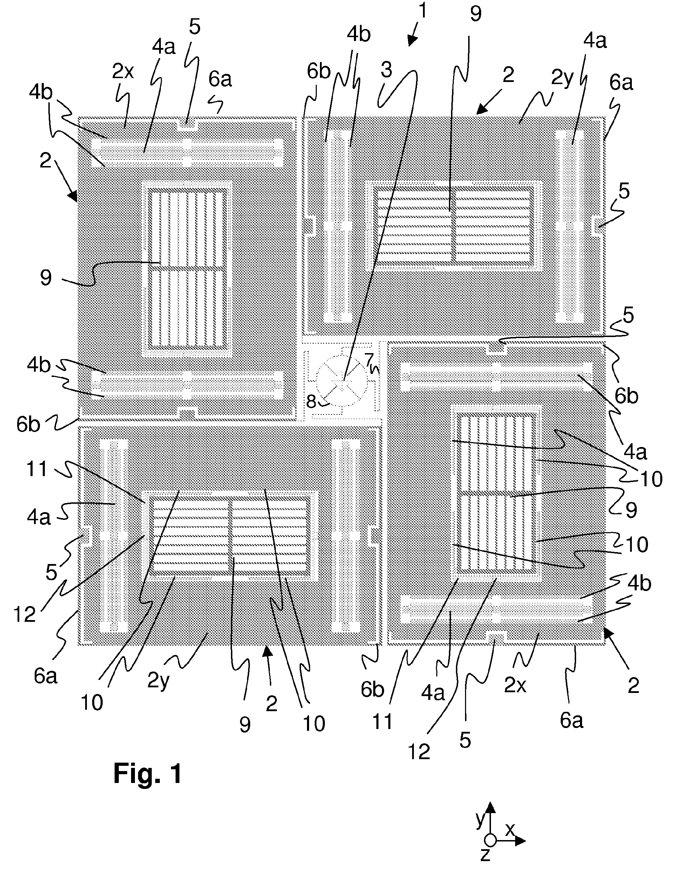

Figur 1 zeigt eine Draufsicht auf ein erfindungsgemäßes 3D-Mikro-Gyroskop. Wesentliche Bauteile sind linear oszillierende Sensorplatten 2. Sie weisen jeweils einen im Wesentlichen rechteckigen Grundriss auf und sind um einen Zentralanker 3 herum angeordnet. Die Sensorplatten 2x stellen die x-Massen dar, während die Sensorplatten 2y die y-Massen bilden. Die x-Massen 2x erstrecken sich bezüglich ihrer größeren Länge in y-Richtung, während die y-Massen 2y sich mehr in x-Richtung erstrecken. Sowohl die x-Massen 2x als auch die y-Massen 2y sind in der x-y-Ebene oberhalb eines nicht dargestellten Substrates angeordnet.

Die x-Massen 2x und die y-Massen 2y werden mittels Kammelektroden in y-bzw. x-Richtung linear oszillierend angetrieben. Die Kammelektroden bestehen jeweils aus zwei statischen Kammteilen 4a, welche auf dem Substrat angeordnet sind, und beweglichen Kammteilen 4b, welche mit der Sensorplatte 2 verbunden sind. Durch das Anlegen einer Wechselspannung werden die Elektroden wechselseitig angezogen, wodurch die Sensorplatten 2 oszillierend hin- und herbewegt werden.

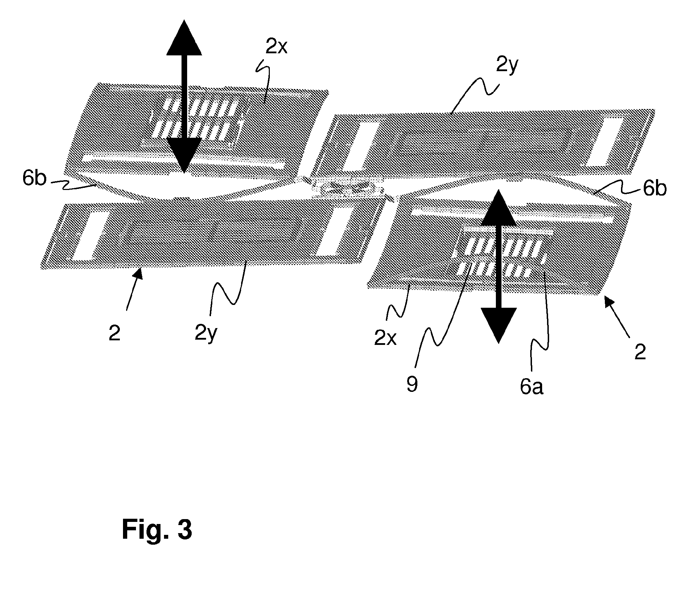

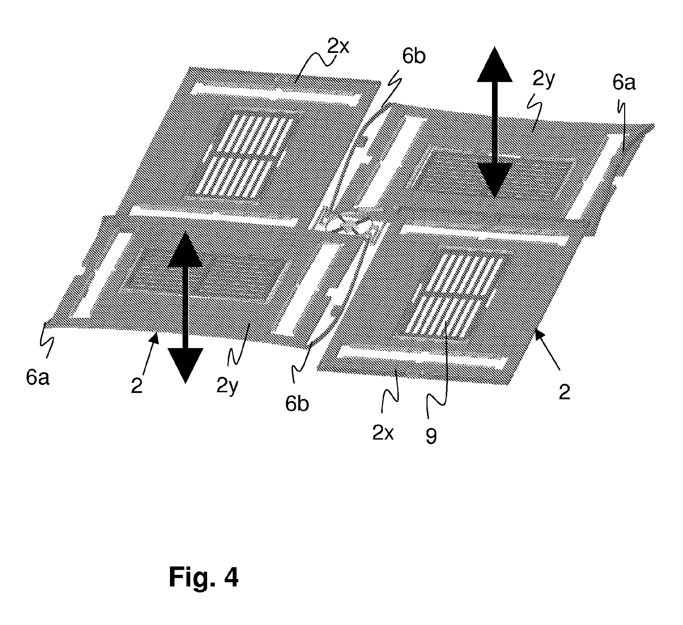

Um in der jeweiligen Richtung beweglich gelagert zu sein, ist jede Sensorplatte 2 an zwei Fixierungsankern 5 mittels Antriebsfedern 6a und 6b befestigt. Es sind hierbei äußere Antriebsfedern 6a und innere Antriebsfedern 6b vorgesehen. Die äußeren Antriebsfedern 6a sind jeweils am äußeren Umfang der Struktur angeordnet, während die inneren Antriebsfedern 6b der benachbarten Sensorplatte 2 zugewandt ist. Die äußere Antriebsfeder 6a und die innere Antriebsfeder 6b können unterschiedlich ausgebildet sein. Dies kann bei manchen Gestaltungen des erfindungsgemäßen Gyroskops vorteilhaft sein, um die Lage der Kippachsen der x-Massen 2x in der x-Drehratenerfassungsbewegung bzw. der y-Massen 2y in der y-Drehratenerfassungsbewegung kontrollieren zu können; siehe Figuren 3 und 4. Ist aufgrund der Konstruktion des Gyroskops sichergestellt, dass die Sensorplatten 2 innerhalb der x-y-Ebene angetrieben und gleichmäßig in z-Richtung ausgelenkt werden können, so ist die unterschiedliche Gestaltung der inneren und der äußeren Antriebsfeder 6a, 6b nicht erforderlich. Der Fixierungsanker 5 ist in der dargestellten vorteilhaften Ausführung der Erfindung etwa in der Mitte der äußeren und der inneren Antriebsfeder 6a, 6b angeordnet.

Die x-Massen 2x und die y-Massen 2y sind punktsymmetrisch zum Zentralanker 3. Die x-Massen 2x sind in ihrem Aufbau den y-Massen 2y vergleichbar. Sie sind jedoch um 90° zueinander verdreht auf dem Substrat angeordnet. Um ein synchrones Schwingen der Sensorplatten 2 zu gewährleisten, sind die letzteren über jeweils eine Koppelfeder 7 und eine kreisförmig mit Speichen an dem Zentralanker 3 befestigte Zentralfeder 8 miteinander verbunden. Die Koppelfedern 7 sind in der Antriebsrichtung der ihr zugeordneten Sensorplatte 2 steif, in radialer Richtung zur z-Achse jedoch weich ausgebildet. Durch die Kopplung mit der Zentralfeder 8 bewirken sie bei der Primärbewegung, dass alle vier Sensorplatten 2 mit gleicher Frequenz angetrieben werden und schwingen können. Hierdurch wird das dynamische Verhalten des Gyroskops wesentlich verbessert.

Innerhalb der Sensorplatten 2 sind z-Massen 9 angeordnet. Die z-Massen 9 sind als Gitterrahmen ausgebildet. Die Gitterstäbe können als bewegliche Elektroden von Plattenkondensatoren dienen, deren statische Gegenstücke stationär auf dem Substrat angeordnet sind, wodurch beim Anliegen einer Drehrate um die z-Achse die Sekundärbewegung durch ein entsprechendes elektrisches Signal erfasst werden kann.

Die z-Masse 9 ist mittels vier Verbindungsfedern 10 an einem Balken 11 befestigt. Der Balken 11 wiederum ist mittig mit einer Verbindung 12 an der Sensorplatte 2 angeordnet. Die z-Masse 9 ist durch die Verbindungsfedern 10 gehalten, welche in z-Richtung und in der Antriebsrichtung der jeweiligen Sensorplatte 2 steif sind, wohingehend sie rechtwinklig zur Antriebsrichtung der jeweiligen Sensorplatte 2 innerhalb der x-y-Ebene weich ausgebildet sind. Die z-Masse 9 kann somit unter der Einwirkung der beim Anliegen einer Drehrate um die z-Achse auftretenden Corioliskräfte rechtwinklig zur Antriebsrichtung - aber innerhalb der x-y-Ebene - ausweichen. Diese Sekundärbewegung kann mittels der Plattenkondensatoren erfasst werden.

In den folgenden Figuren sind typische Bewegungen der einzelnen Bauteile des Gyroskops dargestellt. Die Darstellungen sind zur besseren Erkennbarkeit stark übertrieben ausgeführt. Die tatsächlichen Auslenkungen sind selbstverständlich wesentlich geringer. Bezugszeichen sind exemplarisch und stellvertretend für gleiche Bauteile aus Gründen der besseren Übersichtlichkeit bei allen Figuren nur vereinzelt eingezeichnet.

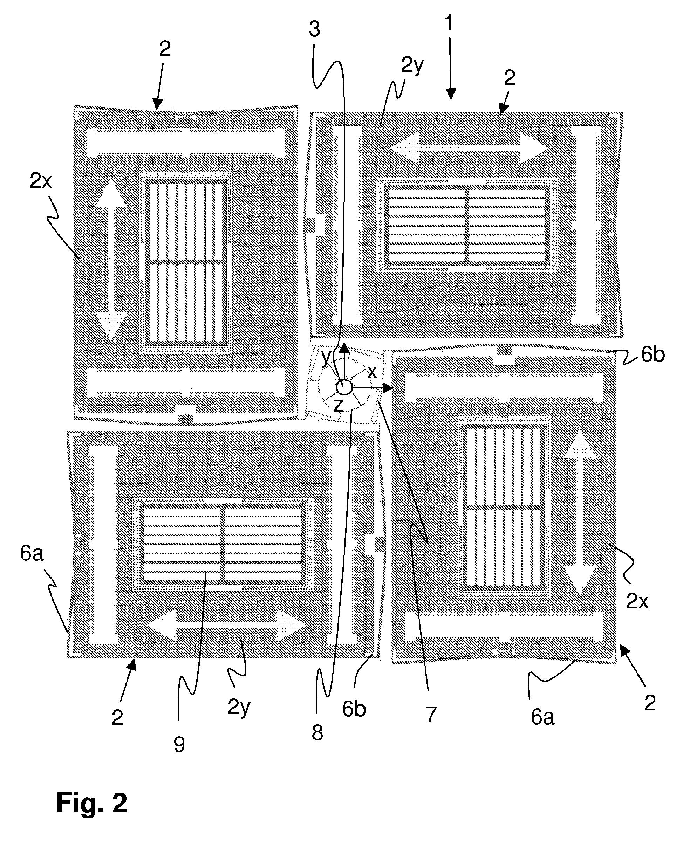

In Figur 2 sind die Antriebsbewegungen der Sensorplatten 2 dargestellt. Die x-Massen 2x bewegen sich linear oszillierend, parallel zur y-Achse und punktsymmetrisch zum Zentralanker 3. Die y-Massen 2y sind gegenüber den x-Massen 2x um 90° verdreht angeordnet. Ihre Bewegungsrichtungen verlaufen parallel zur x-Achse und sind ebenfalls punktsymmetrisch zum Zentralanker 3. Die inneren und äußeren Ankerfedern 6a, 6b sind so ausgebildet, dass sie diese Antriebsbewegung ohne großen Widerstand erlauben. So sind die Antriebsfedern 6a und 6b für die x-Massen 2x in y-Richtung weich ausgeführt, während sie in x-Richtung steif sind. Entsprechend sind die inneren und äußeren Antriebsfedern 6a, 6b der y-Massen 2y in x-Richtung weich, in y-Richtung steif ausgebildet. Hierdurch wird sichergestellt, dass die Antriebsbewegungen der Sensorplatten 2 geradlinig erfolgen. Um die Antriebsbewegungen aller vier Sensorplatten 2 zu synchronisieren, sind sie mittels Koppelfedern 7 und einer Zentralfeder 8, welche an dem Zentralanker 3 befestigt ist, miteinander verbunden. Die Koppelfedern 7 bewirken, dass die vier Sensorplatten 2 hinsichtlich der Antriebsbewegung eine gemeinsame Eigenschwingungsfrequenz aufweisen. Die Koppelfedern 7 sind an den inneren Antriebsfedern 6b befestigt, um Verformungen der Sensorplatten 2 weitgehend zu vermeiden. Durch die Antriebsbewegungen der Sensorplatten 2 wird die Zentralfeder 8 mit ihren Speichen rotatorisch-oszillierend um den Zentralanker 3 bewegt. Neben der Synchronisierung der Sensorplatten 2 sorgen die Koppelfedern 7 und die Zentralfeder 8 darüber hinaus für eine stabile Lagerung der Sensorplatten 2 auf dem Substrat.

In Figur 3 ist in perspektivischer Darstellung die Auslenkung der x-Massen 2x zur Erfassung einer Drehbewegung des Gyroskops um die x-Achse dargestellt. Die x-Massen 2x werden hierbei als Reaktion auf Corioliskräfte, welche rechtwinklig zur Primärbewegungsrichtung und zur Drehachse auftreten, in z-Richtung ausgelenkt. Die äußeren und inneren Antriebsfedern 6a und 6b sind hierfür derart ausgebildet, dass sie in z-Richtung relativ weich sind, so dass sie bei einem entsprechenden Coriolis-Kräftepaar, welches auf die x-Massen 2x einwirkt, nachgeben und die x-Massen 2x gegensinnig in z-Richtung aus der x-y-Ebene heraus bewegt werden. Die Sekundärbewegung der x-Masse 2x kann mittels Kondensatorplatten erfasst werden, welche durch die Oberseite des Substrats und die Unterseite der x-Massen 2x gebildet werden. Durch die Sekundärbewegung verändert sich der Abstand der Kondensatorplatten, wodurch ein elektrisches Signal erzeugt wird, welches auf die x-Drehrate des Gyroskops hinweist. Die y-Massen 2y bleiben bei einer x-Drehrate des Gyroskops in der x-y-Ebene liegen, denn eine Drehrate um die x-Achse erzeugt bei einer Primärbewegung in x-Richtung keine Corioliskräfte.

In Figur 4 ist in perspektivischer Darstellung die Auslenkung der y-Massen 2y beim Auftreten einer y-Drehrate dargestellt. Die y-Massen 2y, welche in x-Richtung ihre Primärbewegung haben, werden in ihrer Sekundärbewegung als Reaktion auf eine y-Drehrate in z-Richtung aus der x-y-Ebene heraus bewegt. Die inneren und äußeren Antriebsfedern 6a und 6b sind dementsprechend so ausgebildet, dass sie sowohl die Primärbewegung als auch die Sekundärbewegung der y-Masse 2y aufgrund ihrer in diesen Richtungen geringeren Federkonstante zulassen. Die Sekundärbewegung kann wiederum durch Plattenkondensatoren wie bei den x-Massen 2x festgestellt werden. Analog dem Verhalten der y-Massen ändert sich der Bewegungszustand der x-Massen 2x beim Auftreten einer y-Drehrate nicht, sondern vollzieht sich unverändert in der x-y-Ebene.

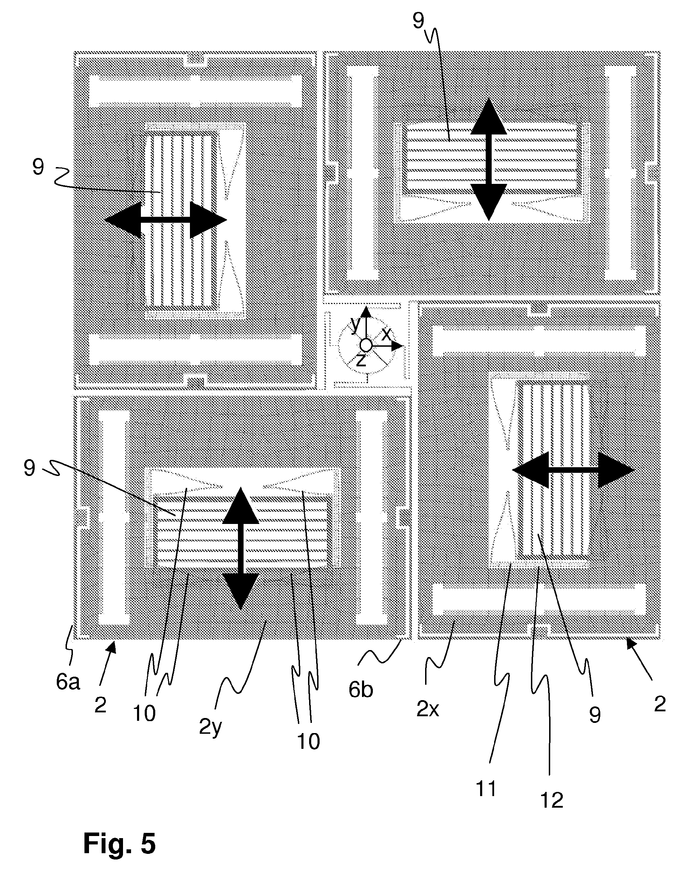

Die Erfassung einer z-Drehrate des Gyroskops ist in Figur 5 dargestellt. Während bei der Erfassung einer x- und/oder einer y-Drehrate sowie in der Primärbewegung die z-Massen 9 weitgehend fest mit den ihnen zugeordneten x-Massen 2x bzw. y-Massen 2y bewegt werden, nehmen sie eine eigenständige Bewegung beim Auftreten einer z-Drehrate auf. Die z-Massen 9 sind aufgrund ihrer Verbindungsfedern 10 in der Lage, innerhalb der x-y-Ebene rechtwinklig zur Antriebsrichtung auszuweichen, wenn aufgrund einer Drehrate um die z-Achse eine entsprechende Corioliskraft auftritt. Die z-Masse 9 bewegt sich dabei innerhalb eines Ausschnitts der x-Masse 2x bzw. der y-Masse 2y. Die scheinbare Überlappung der z-Massen 9 mit den x-Massen 2x bzw. y-Massen 2y in Figur 5 ist ein Artefakt des zur Bilderstellung benutzten Simulationsprogramms, welches die errechneten Auslenkungen der besseren Sichtbarkeit wegen übersteigert darstellt, tritt aber in der Realität selbstverständlich nicht auf, da sich die z-Massen 9 in derselben Ebene wie die x-Massen 2x bzw. y-Massen 2y befinden. Die Sekundärbewegung der z-Masse 9 wird mittels vertikaler Plattenelektroden oder mittels Kammelektroden erfasst. Hierbei wird der Abstand der Gitterstruktur der z-Masse 9 zu stationär auf dem Substrat angeordneten Elementen des Sensorelements kapazitiv ermittelt und in ein entsprechendes elektrisches Signal umgewandelt.

Die einzelnen Drehraten des erfindungsgemäßen Mikro-Gyroskops sind durch die eindeutige Zuordnung bestimmter Bauteile zu Drehungen um die jeweilige Achse eindeutig feststellbar. Sowohl x-Massen 2x als auch y-Massen 2y und z-Massen 9 weisen voneinander unabhängige Sekundärbewegungen auf. Die entsprechende Drehrate ist somit eindeutig zu ermitteln und mittels elektrischer Signale von entsprechenden Sensorelementen messbar.

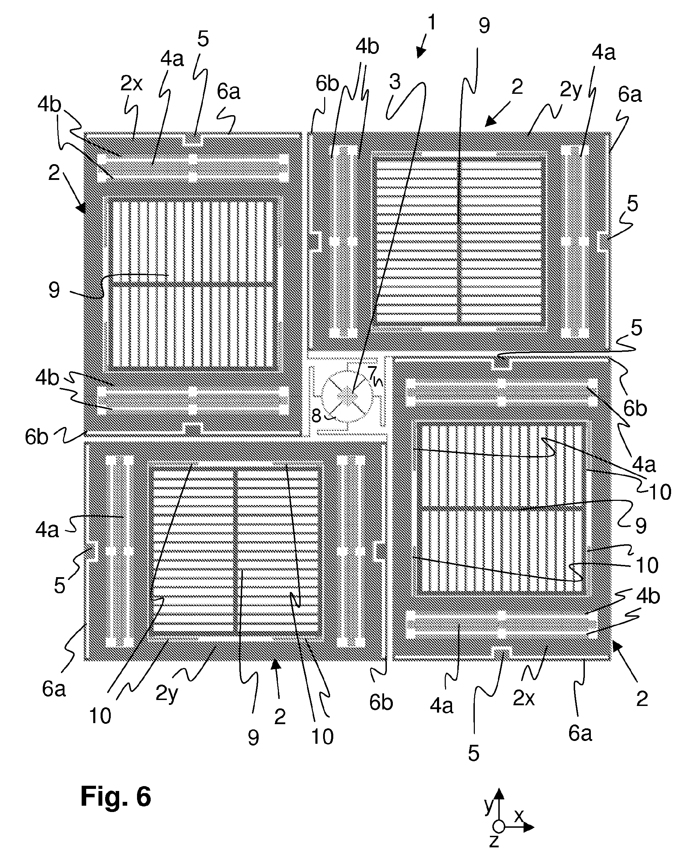

Figur 6 zeigt als weiteres Beispiel eines erfindungsgemäßen Gyroskops eine Draufsicht auf ein z-Mikro-Gyroskop. Es wird dabei Bezug genommen auf die analoge Ausführung der Figur 1. Um Wiederholungen zu vermeiden, werden im Folgenden im Wesentlichen die Unterschiede beschrieben.

Um die Erfassung einer z-Drehrate genau und sensibel erfassen zu können, ist die z-Masse 9 in Relation zu der sie aufnehmenden x- bzw. y-Masse 2x, 2y größer als bei dem 3D-Gyroskop ausgeführt. Die x- und die y-Massen 2x, 2y reagieren nicht auf x- bzw. y-Drehraten mit Auslenkungen und können daher bzgl. ihrer Masse reduziert werden. Die Verbindungsfedern 10 sind direkt an der x- bzw. y-Masse 2x, 2y angeordnet. Ein Balken 11 und ein Balkenansatz 12 können zwar angeordnet sein, sind aber nicht erforderlich, da eine Verspannung durch die Verwindung der x- bzw. y-Masse 2x, 2y aufgrund der fehlenden Auslenkungen in z-Richtung nicht zu erwarten ist. Die äußeren und die inneren Antriebsfedern 6a, 6b sind zwar ebenso wie bei dem 3D-Gyroskop kontrolliert nachgiebig in der Antriebsrichtung innerhalb der x-y-Ebene. Bezüglich einer Auslenkung der x- bzw. y-Masse 2x, 2y in z-Richtung sind sie allerdings steif ausgebildet. Dem entsprechend ist neben einem geänderten Federquerschnitt auch die Anordnung der Antriebsfedern 6a, 6b an der x- bzw. y-Masse 2x, 2y direkter erfolgt. Darüber hinaus stellen die x- bzw. y-Masse 2x, 2y auch keine Sensorplatten dar, welche mit Sensorplatten auf dem Substrat 1 zusammenwirken, da eben eine Auslenkung in z-Richtung nicht erfolgt.

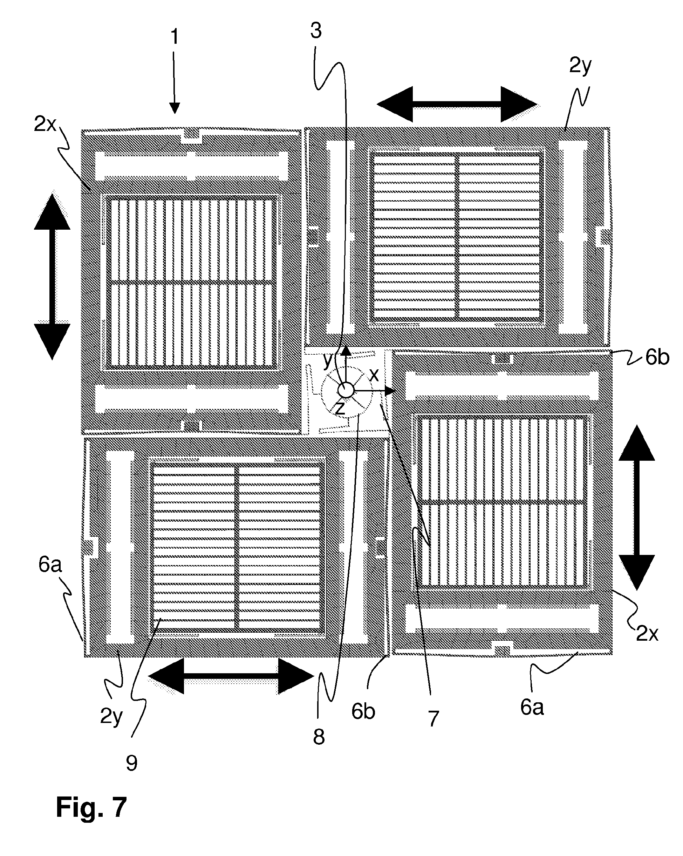

Figur 7 zeigt die Primärbewegung des z-Mikro-Gyroskops gemäß Figur 6. Ebenso wie bei Figur 2 und der dort erfolgten Beschreibung werden die x-Massen 2x in y-Richtung und die y-Massen 2y in x-Richtung oszillierend angetrieben.

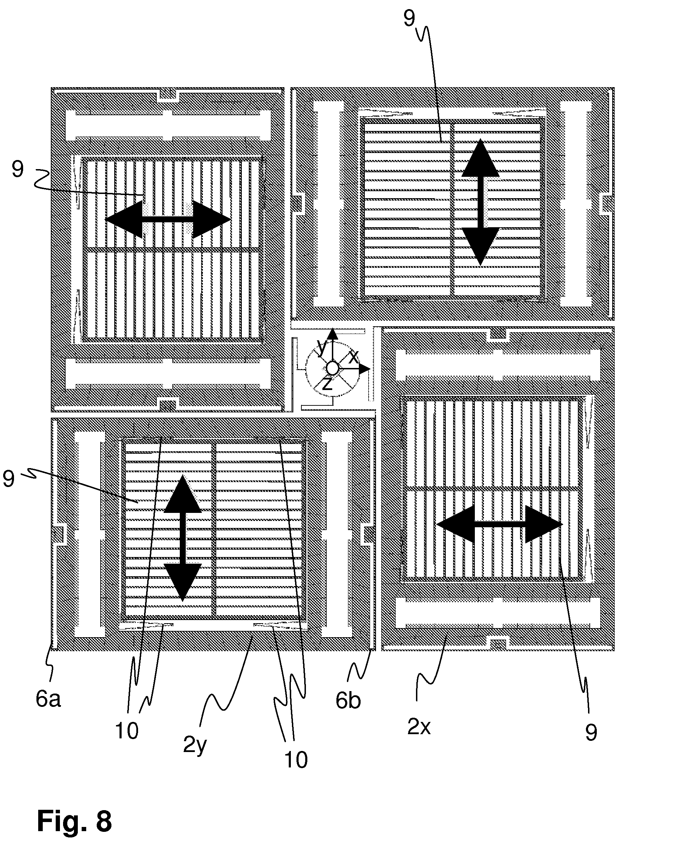

Figur 8 stellt die Erfassung einer z-Drehrate des z-Gyroskops gemäß Figur 6 dar. Dies ist analog zu Figur 5 und der dort beschriebenen Arbeitsweise. Die z-Massen 9 werden beim Auftreten einer Corioliskraft auf Grund einer z-Drehung des Substrats 1 in x- bzw. y- Richtung ausgelenkt. Liegt eine Drehrate um die z-Achse an, wirken auf die z-Massen 9 wie auch in Figur 5 dargestellt radial nach innen/außen zeigende Kräfte. Diese z-Massen 9 werden dann in die Bewegungsform der Erfassungs-Mode gezwungen. Vertikale Flächen der Aussparungen in den z-Massen 9 bilden die sich bewegenden Hälften von Plattenkondensatoren, deren statische Hälften sich innerhalb der Aussparungen befinden und nicht eingezeichnet sind.

Ebenso wie beim 3D-Gyroskop lenken von außen wirkende Stöße die Antriebs- bzw. Erfassungsrahmen in solcher Weise aus, daß sich die Kapazitätsänderungen an den in und um die Erfassungsrahmen angeordneten Plattenkondensatoren in Summe annullieren. Damit wird in sehr verlässlicher Weise verhindert, daß äußere Schocks der Erfassungselektronik ein falsches Drehratensignal anzeigen können.

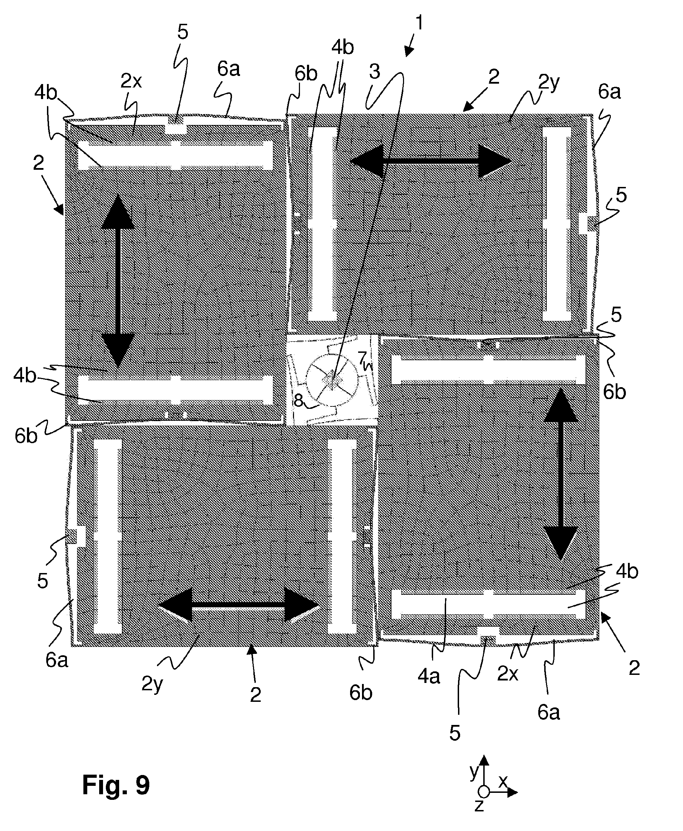

In Figur 9 ist eine Draufsicht auf die Primärbewegung eines erfindungsgemäßen zweidimensionalen x-y-Mikro-Gyroskops dargestellt. Das Gyroskop entspricht im Wesentlichen dem Gyroskop der Figuren 1 bis 4. Unterschiedlich ist lediglich, dass das vorliegende x-y-Gyroskop keine z-Masse 9 mit deren Verbindungsfedern 10, Balken 11 und Balkenansatz 12 aufweist. Es wird daher auf die Beschreibung der Figuren 1 bis 4 mit Ausnahme der Beschreibung zu der z-Masse und der entsprechenden Erfassung einer z-Drehrate vollumfänglich Bezug genommen. Die Primärbewegung der x-Massen 2x und der y-Massen 2y erfolgt wiederum in tangentialer Richtung um den Zentralanker 3 herum. Die x-Massen 2x und die y-Massen 2y sind mittels Koppelfeder 7 und Zentralfeder 8 miteinander zur Synchronisation ihrer Bewegungen und mit dem Zentralanker 3 zur Halterung auf dem Substrat verbunden. Die x-Massen 2x und die y-Massen 2y werden oszillierend und gleichsinnig-rotatorisch zueinander angetrieben.

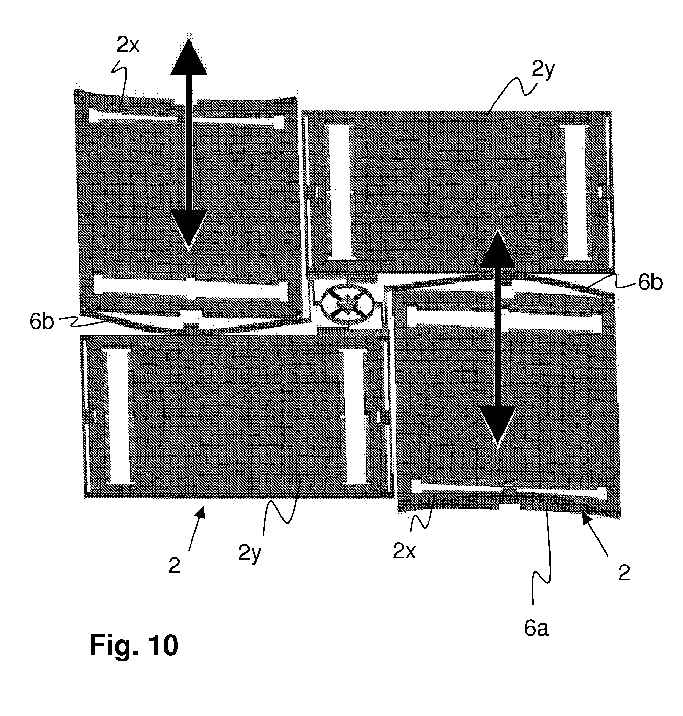

Figur 10 zeigt das Mikro-Gyroskop gemäß Figur 9 bei der Erfassung einer x-Drehrate. Die x-Massen 2x werden hierbei auf Grund einer Corioliskraft in z-Richtung aus ihrer x-y-Ebene heraus ausgelenkt. Die x-Massen 2x bewegen sich dabei im Wesentlichen parallel zu ihrer Antriebslage entlang der z-Achse. Die damit einher gehende Veränderung des Abstandes der x-Massen 2x vom Substrat wird von entsprechenden Sensorplatten, die sich an der Unterseite der x-Massen 2x und der Oberseite des Substrats befinden, erfasst.

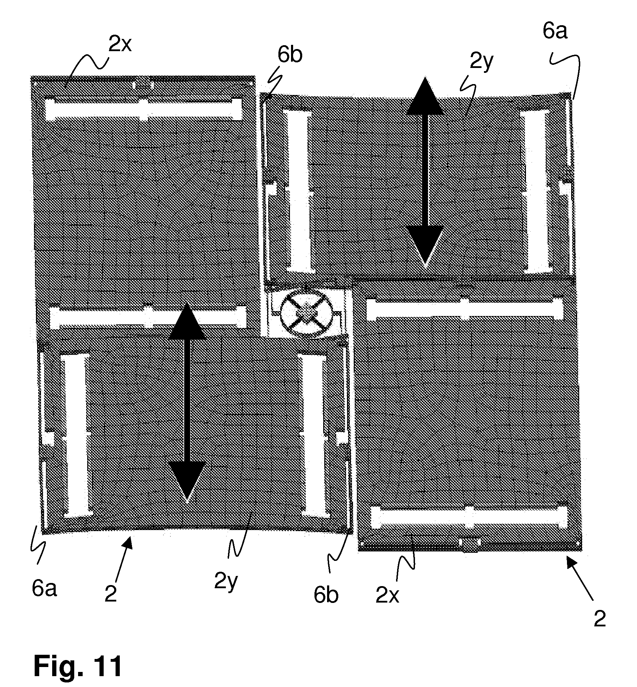

Figur 11 zeigt analog zur Figur 10 das Mikro-Gyroskop gemäß Figur 9 bei der Erfassung einer y-Drehrate. An Stelle der x-Massen 2x werden hier die y-Massen 2y aus ihrer Antriebsebene in z-Richtung ausgelenkt.

Die vorliegende Erfindung ist nicht auf die dargestellten Ausführungsbeispiele beschränkt. So sind jederzeit andere Formgebungen und andere Anordnungen der einzelnen Bauteile im Rahmen der Patentansprüche möglich. Insbesondere ist es möglich, dass bei einer als 3D-Gyroskop ausgeführten Bauweise, nur eine der drei Drehraten, beispielsweise die z-Drehrate ausgewertet wird. Auch dann wäre der Einsatz des Gyroskops als reines z-Gyroskop möglich. Ebenso kann bei einem 3D-Gyroskop auf die Anordnung der Sensorplatten unter der x- bzw. y-Masse und auf dem Substrat verzichtet werden, um ein z-Gyroskop zu erhalten. Sensorelemente sind dann nur den z-Massen zugeordnet. Vorteilhafter ist allerdings die Ausführung des in den Figuren dargestellten reinen z-Gyroskops, da hierdurch eine kostengünstigere Herstellung und eine genauere Messung ermöglicht ist.

### Bezugszeichenliste

- 1: Substrat
- 2: Sensorplatte
- 2x: x-Masse
- 2y: y-Masse
- 3: Zentralanker
- 4a: statische Kammteile
- 4b: bewegliche Kammteile
- 5: Fixierungsanker
- 6a: äußere Antriebsfeder
- 6b: innere Antriebsfeder
- 7: Koppelfeder
- 8: Zentralfeder
- 9: z-Masse
- 10: Verbindungsfeder
- 11: Balken
- 12: mittiger Balkenansatz

## Patentansprüche

1. Mikro-Gyroskop zur Ermittlung von Rotationsbewegungen um mindestens eine von drei senkrecht aufeinanderstehenden Raumachsen x, y und z,
mit einem Substrat (1), auf welchem mehrere parallel zur Ebene des Substrats (1) in einer x-y-Ebene oszillierende Massen (2x, 2y, 9) angeordnet sind, wobei einige der oszillierenden Massen (2x, 2y) mittels Federn und Ankern auf dem Substrat (1) befestigt sind,
mit Antriebselementen (4a, 4b) zur Aufrechterhaltung oszillierender linearer Schwingungen der Massen (2x, 2y, 9), welche bei einer Rotation des Substrats (1) um eine beliebige Raumachse Corioliskräften unterworfen sind und
mit Sensorelementen, um die Auslenkungen der Massen (2x, 2y, 9) aufgrund der erzeugten Corioliskräfte zu erfassen,
**dadurch gekennzeichnet,**
**dass** auf dem Substrat (1) ein Zentralanker (3) angeordnet ist,
**dass** die Massen (2x, 2y, 9) um den Zentralanker (3) herum angeordnet sind und derart auf dem Substrat (1) gelagert sind, dass sie linear und tangential zu dem Zentralanker (3) antreibbar sind,
**dass** einige der oszillierenden Massen x-Massen (2x) sind, die zusätzlich entlang der senkrecht auf dem Substrat (1) stehenden z-Achse auslenkbar sind, wodurch sie Drehraten um die x-Achse erfassen können, und/oder
**dass** einige der oszillierenden Massen y-Massen (2y) sind, die zusätzlich entlang der senkrecht auf dem Substrat (1) stehenden z-Achse auslenkbar sind, wodurch sie Drehraten um die y-Achse erfassen können und
**dass** die x-Massen (2x) bzw. die y-Massen (2y) mit dem Zentralanker (3) verbunden sind.

2. Mikro-Gyroskop nach dem vorherigen Anspruch, **dadurch gekennzeichnet, dass** andere der oszillierenden Massen z-Massen (9) sind, die zusätzlich in der x-y-Ebene, aber senkrecht zu ihrer jeweiligen Antriebsrichtung auslenkbar sind, wodurch sie Drehraten um die z-Achse erfassen können, und die z-Massen (9) mit den x-Massen (2x) oder den y-Massen (2y) verbunden sind.

3. Mikro-Gyroskop nach Anspruch 2 , **dadurch gekennzeichnet, dass** die z-Massen (9) Rahmen sind.

4. Mikro-Gyroskop nach einem oder mehreren der Ansprüche 1 bis 3, **dadurch gekennzeichnet, dass** die x- und die y-Massen (2x, 2y) mit Fixierungsankern (5) und Antriebsfedern (6a, 6b) auf dem Substrat (1) angeordnet sind.

5. Mikro-Gyroskop nach Anspruch 4, **dadurch gekennzeichnet, dass** die Antriebsfedern (6a, 6b) der x-Massen (2x) derart ausgelegt sind, dass sie in y- und in z-Richtung eine kontrollierbare Nachgiebigkeit aufweisen und in x-Richtung hingegen kaum nachgeben, wenn das Gyroskop x-Drehraten erfassen soll.

6. Mikro-Gyroskop nach Anspruch 4 oder 5, **dadurch gekennzeichnet, dass** die Antriebsfedern (6a, 6b) der x-Massen (2x) derart ausgelegt sind, dass sie in y-Richtung eine kontrollierbare Nachgiebigkeit aufweisen und in z- und in x-Richtung kaum nachgeben, wenn das Gyroskop keine x-Drehraten erfassen soll.

7. Mikro-Gyroskop nach einem oder mehreren der Ansprüche 4 bis 6, **dadurch gekennzeichnet, dass** die Antriebsfedern (6a, 6b) der y-Massen (2y) derart ausgelegt sind, dass sie in x-Richtung eine kontrollierbare Nachgiebigkeit aufweisen und in y- und in z-Richtung kaum nachgeben, wenn das Gyroskop keine y-Drehraten erfassen soll.

8. Mikro-Gyroskop nach einem oder mehreren der Ansprüche 4 bis 7, **dadurch gekennzeichnet, dass** die Antriebsfedern (6a, 6b) der y-Massen (2y) derart ausgelegt sind, dass sie in x- und in z-Richtung eine kontrollierbare Nachgiebigkeit aufweisen und in y-Richtung hingegen kaum nachgeben, wenn das Gyroskop y-Drehraten erfassen soll.

9. Mikro-Gyroskop nach einem oder mehreren der Ansprüche 4 bis 8, dadurchgekennzeichnet, dass jede der x- und der y-Massen (2x, 2y) mittels einer äußeren und inneren Antriebsfeder (6a, 6b) gehalten ist und die äußeren und die inneren Antriebsfedern (6a, 6b) mit einer kontrollierbaren Nachgiebigkeit in z-Richtung an der x- bzw. y-Masse (2x, 2y) angeordnet sind, wenn das Gyroskop x- bzw. y-Drehraten erfassen soll, wobei die äußeren Antriebsfedern (6a) jeweils am äußeren Umfang der durch die Massen (2x, 2y) gebildeten Struktur angeordnet sind, während die inneren Antriebsfedern (6b) einer benachbarten Masse (2x, 2y) zugewandt sind.

10. Mikro-Gyroskop nach einem oder mehreren der Ansprüche 4 bis 9, **dadurch gekennzeichnet, dass** jede der x- und der y-Massen (2x, 2y) mittels einer äußeren und einer inneren Antriebsfeder (6a, 6b) gehalten ist und die äußeren und die inneren Antriebsfedern (6a, 6b) unterschiedliche Längen aufweisen, wobei die äußeren Antriebsfedern (6a) jeweils am äußeren Umfang der durch die Massen (2x, 2y) gebildeten Struktur angeordnet sind, während die inneren Antriebsfedern (6b) einer benachbarten Masse zugewandt sind.

11. Mikro-Gyroskop nach einem oder mehreren der Ansprüche 1 bis 10, **dadurch gekennzeichnet, dass** die x-Massen (2x) in y-Richtung und die y-Massen (2y) in x-Richtung ausgerichtet und angetrieben sind.

12. Mikro-Gyroskop nach einem oder mehreren der Ansprüche 1 bis 11, **dadurch gekennzeichnet, dass** die x- und die y-Massen (2x, 2y) jeweils mittels einer Koppelfeder (7) an einer Zentralfeder (8) angeordnet sind.

13. Mikro-Gyroskop nach Anspruch 12, **dadurch gekennzeichnet, dass** die Koppelfeder (7) spiralig ausgebildet ist, wobei sie in tangentialer Richtung steif ist, um Kopplungskräfte in dieser Richtung zu übertragen, und in radialer Richtung weich ist, um Verzerrungskräfte auf die x-bzw. y-Massen (2x, 2y) zu vermeiden.

14. Mikro-Gyroskop nach einem oder mehreren der Ansprüche 2 bis 13, **dadurch gekennzeichnet, dass** jeweils eine z-Masse (9) mittels Verbindungsfedern (10) an jeweils einer x- oder einer y-Masse (2x, 2y) angeordnet ist.

15. Mikro-Gyroskop nach Anspruch 14, **dadurch gekennzeichnet, dass** die Verbindungsfedern (10) an einem im Wesentlichen mittig mittels eines Balkenansatzes (12) an der x- bzw. y-Masse (2x, 2y) befestigten Balken (11) angeordnet sind.

16. Mikro-Gyroskop nach Anspruch 4 und Anspruch 15, **dadurch gekennzeichnet, dass** der Balkenansatz (12) und die Fixierungsanker (5) der x- bzw. y-Masse (2x, 2y) miteinander fluchten.

17. Mikro-Gyroskop nach einem oder mehreren der Ansprüche 14 bis 16, **dadurch gekennzeichnet, dass** die der x-Masse (2x) zugeordneten Verbindungsfedern (10) in x-Richtung eine kontrollierbare Nachgiebigkeit aufweisen und in y- und z-Richtung kaum nachgeben.

18. Mikro-Gyroskop nach einem oder mehreren der Ansprüche 14 bis 17, **dadurch gekennzeichnet, dass** die der y-Masse (2y) zugeordneten Verbindungsfedern (10) in y-Richtung eine kontrollierbare Nachgiebigkeit aufweisen und in x- und z-Richtung kaum nachgeben.

19. Mikro-Gyroskop nach einem oder mehreren der Ansprüche 1 bis 18, **dadurch gekennzeichnet, dass** das Gyroskop als 1 D-, 2D- oder mit z-Massen (9) als 3D-Gyroskop ausgebildet ist.

## Claims

1. A micro-gyroscope for determining rotational displacements about at least one of three spatial axes x, y, and z perpendicular to each other, having a substrate (1) on which a plurality of masses (2x, 2y, 9) are disposed oscillating parallel to the plane of the substrate (1) in an X-Y plane, some of the oscillating masses (2x, 2y) being attached to the substrate (1) by means of springs and anchors,
having drive elements (4a, 4b) for maintaining oscillating vibrations of the masses (2x, 2y, 9), being subjected to Coriolis forces when the substrate (1) is rotated about an arbitrary spatial axis, and
having sensor elements in order to detect deflections of the masses (2x, 2y, 9) due to the Coriolis forces generated,
**characterized in that**,
a central anchor (3) is disposed on the substrate (1),
that the masses (2x, 2y, 9) are disposed about the central anchor (3) and supported on the substrate (1) so that said masses can be driven linearly and tangentially to the central anchor (3),
that some of the oscillating masses are x-masses (2x) additionally deflectable along the Z-axis perpendicular to the substrate (1) and thereby able to capture rates of rotation about the X-axis, and/or
that some of the oscillating masses are y-masses (2y) additionally deflectable along the Z-axis perpendicular to the substrate (1) and thereby able to capture rates of rotation about the Y-axis, and
that the X-masses (2x) and the Y-masses (2y) are connected to the central anchor (3).

2. The micro-gyroscope according to the preceding claim, **characterized in that** others of the oscillating masses are z-masses (9) additionally deflectable in the X-Y plane but perpendicular to the associated drive direction thereof and thereby able to capture rates of rotation about the Z-axis, and the Z-masses (9) are connected to the X-masses (2x) or the Y-masses (2y).

3. The micro-gyroscope according to claim 2, **characterized in that** the Z-masses (9) are frames.

4. The micro-gyroscope according to any one or more of the claims 1 through 3, **characterized in that** the X-masses and the Y-masses (2x, 2y) are disposed on the substrate (1) by means of fixing anchors (5) and drive springs (6a, 6b).

5. The micro-gyroscope according to claim 4, **characterized in that** the drive springs (6a, 6b) of the X-masses (2x) are designed so as to have controllable compliance in the Y-direction and the Z-direction and to have almost no compliance in the X-direction if the gyroscope is intended to capture X rotational rates.

6. The micro-gyroscope according to claim 4 or 5, **characterized in that** the drive springs (6a, 6b) of the X-masses (2x) are designed so as to have controllable compliance in the Y-direction and to have almost no compliance in the Z-direction and the X-direction if the gyroscope is not intended to capture X rotational rates.

7. The micro-gyroscope according to any one or more of the claims 4 through 6, **characterized in that** the drive springs (6a, 6b) of the Y-masses (2y) are designed so as to have controllable compliance in the X-direction and to have almost no compliance in the Y-direction and the Z-direction if the gyroscope is not intended to capture Y rotational rates.

8. The micro-gyroscope according to any one or more of the claims 4 through 7, **characterized in that** the drive springs (6a, 6b) of the Y-masses (2y) are designed so as to have controllable compliance in the X-direction and the Z-direction and to have almost no compliance in the Y-direction if the gyroscope is intended to capture Y rotational rates.

9. The micro-gyroscope according to any one or more of the claims 4 through 8, **characterized in that** each of the X-masses and the Y-masses (2x, 2y) is held by means of an outer and an inner drive spring (6a, 6b) and the outer and the inner drive springs (6a, 6b) are disposed on the X-mass or the Y-mass (2x, 2y) having a controllable compliance in the Z-direction if the gyroscope is intended to capture X and Y rotational rates, wherein the outer drive springs (6a) are each disposed on the outer circumference of the structure formed by the masses (2x, 2y) while the inner drive springs (6b) face toward an adjacent mass (2x, 2y).

10. The micro-gyroscope according to any one or more of the preceding claims 4 through 9, **characterized in that** each of the X-masses and the Y-masses (2x, 2y) is held by means of an outer and an inner drive spring (6a, 6b) and the outer and the inner drive springs (6a, 6b) have different lengths, wherein the outer drive springs (6a) are each disposed on the outer circumference of the structure formed by the masses (2x, 2y), while the inner drive springs (6b) face toward an adjacent mass. 2

11. The micro-gyroscope according to any one or more of the claims 1 through 10, **characterized in that** the X-masses (2x) are aligned and driven in the Y-direction and the Y-masses (2y) are aligned and driven in the X-direction.

12. The micro-gyroscope according to any one or more of the claims 1 through 11, **characterized in that** the X-masses and the Y-masses (2x, 2y) are each disposed by means of a coupling spring (7) on a central spring (8).

13. The micro-gyroscope according to claim 12, **characterized in that** the coupling spring (7) is spiral in design, wherein said spring is rigid in the tangential direction in order to transmit coupling forces in said direction and is soft in the radial direction in order to prevent distorting forces on the X-masses and the Y-masses (2x, 2y).

14. The micro-gyroscope according to any one or more of the claims 2 through 13 **characterized in that** one Z-mass (9) is disposed on each X-mass or Y-mass (2x, 2y) by means of connecting springs (10).

15. The micro-gyroscope according to claim 14, **characterized in that** the connecting springs (10) are disposed on a beam (11) attached substantially centered by means of a beam end (12) on the X-mass or Y-mass (2x, 2y).

16. The micro-gyroscope according to claim 4 and claim 15, **characterized in that** the beam end (12) and the fixing anchors (5) of the X-mass or Y-mass (2x, 2y) are flush to each other.

17. The micro-gyroscope according to any one or more of the claims 14 through 16, **characterized in that** connecting springs (10) associated with the X-mass (2x) have a controllable compliance in the X-direction and have almost no compliance in the Y-direction and the Z-direction.

18. The micro-gyroscope according to any one or more of the claims 14 through 17, **characterized in that** the connecting springs (10) associated with the Y-mass (2y) have a controllable compliance in the Y-direction and have almost no compliance in the X-direction and the Z-direction.

19. The micro-gyroscope according to any one or more of the claims 1 through 18, **characterized in that** the gyroscope is implemented as a 1 D, 2D, or, having Z-masses (9), as a 3D gyroscope.

## Revendications

1. Micro-gyroscope servant à déterminer les mouvements de rotation autour d'au moins un parmi trois axes dans l'espace x, y et z perpendiculaires les uns aux autres,
comprenant un substrat (1) sur lequel sont disposées plusieurs masses (2x, 2y, 9), oscillant, parallèlement au plan du substrat (1), dans un plan x-y, certaines des masses (2x, 2y) oscillantes étant fixées sur le substrat (1) au moyen de ressorts et d'éléments d'ancrage,
comprenant des éléments d'entraînement (4a, 4b) destinés à maintenir les oscillations linéaires oscillantes des masses (2x, 2y, 9), lesquelles sont soumises à des forces de Coriolis lors d'une rotation du substrat (1) autour d'un axe quelconque dans l'espace, et comprenant des éléments de détection pour mesurer les déviations des masses (2x, 2y, 9) en raison des forces de Coriolis générées, **caractérisé en ce**
**qu'**un élément d'ancrage central (3) est disposé sur le substrat (1),
en ce que les masses (2x, 2y, 9) sont disposées autour de l'élément d'ancrage central (3) et sont montées sur le substrat (1) de telle sorte qu'elles peuvent être entraînées de manière linéaire et tangentielle par rapport à l'élément d'ancrage central (3),
en ce que certaines des masses oscillantes sont des masses x (2x) qui peuvent en plus être déviées le long de l'axe z qui se trouve perpendiculairement sur le substrat (1), ce qui leur permet de capter les vitesses de rotation autour de l'axe x, et/ou
en ce que certaines des masses oscillantes sont des masses y (2y) qui peuvent en plus être déviées le long de l'axe z qui se trouve perpendiculairement sur le substrat (1), ce qui leur permet de capter les vitesses de rotation autour de l'axe y, et
en ce que les masses x (2x) ou les masses y (2y) sont reliées à l'élément d'ancrage central (3).

2. Micro-gyroscope selon la revendication précédente, **caractérisé en ce que** les autres des masses oscillantes sont des masses z (9) qui peuvent en plus être déviées dans le plan x-y, mais perpendiculairement à leur direction d'entraînement respective, ce qui leur permet de capter les vitesses de rotation autour de l'axe z, et les masses z (9) sont reliées aux masses x (2x) ou aux masses y (2y).

3. Micro-gyroscope selon la revendication 2, **caractérisé en ce que** les masses z (9) sont des cadres.

4. Micro-gyroscope selon une ou plusieurs des revendications 1 à 3, **caractérisé en ce que** les masses x et y (2x, 2y) sont montées sur le substrat (1) avec des éléments d'ancrage de fixation (5) et des ressorts d'entraînement (6a, 6b).

5. Micro-gyroscope selon la revendication 4, **caractérisé en ce que** les ressorts d'entraînement (6a, 6b) des masses x (2x) sont conçus de telle sorte qu'ils présentent dans la direction y et dans la direction z une flexibilité contrôlable, alors qu'ils fléchissent à peine dans la direction x lorsque le gyroscope doit capter des vitesses de rotation x.

6. Micro-gyroscope selon la revendication 4 ou 5, **caractérisé en ce que** les ressorts d'entraînement (6a, 6b) des masses x (2x) sont conçus de telle sorte qu'ils présentent dans la direction y une flexibilité contrôlable, alors qu'ils fléchissent à peine dans la direction z et dans la direction x lorsque le gyroscope ne doit capter aucune vitesse de rotation x.

7. Micro-gyroscope selon une ou plusieurs des revendications 4 à 6, **caractérisé en ce que** les ressorts d'entraînement (6a, 6b) des masses y (2y) sont conçus de telle sorte qu'ils présentent dans la direction x une flexibilité contrôlable, alors qu'ils fléchissent à peine dans la direction y et dans la direction z lorsque le gyroscope ne doit capter aucune vitesse de rotation y.

8. Micro-gyroscope selon une ou plusieurs des revendications 4 à 7, **caractérisé en ce que** les ressorts d'entraînement (6a, 6b) des masses y (2y) sont conçus de telle sorte qu'ils présentent dans la direction x et dans la direction z une flexibilité contrôlable, alors qu'ils fléchissent à peine dans la direction y lorsque le gyroscope doit capter des vitesses de rotation y.

9. Micro-gyroscope selon une ou plusieurs des revendications 4 à 8, **caractérisé en ce que** chacune des masses x et des masses y (2x, 2y) est maintenue au moyen d'un ressort d'entraînement (6a, 6b) extérieur et intérieur et les ressorts d'entraînement (6a, 6b) extérieurs et intérieurs sont montés avec une flexibilité contrôlable dans la direction z sur la masse x ou la masse y (2x, 2y), lorsque le gyroscope doit capter des vitesses de rotation x ou y, les ressorts d'entraînement extérieurs (6a) étant respectivement montés sur le pourtour extérieur de la structure formée par les masses (2x, 2y), alors que les ressorts d'entraînement intérieurs (6b) sont dirigés vers une masse (2x, 2y) voisine.

10. Micro-gyroscope selon une ou plusieurs des revendications 4 à 9, **caractérisé en ce que** chacune des masses x et y (2x, 2y) est maintenue au moyen d'un ressort d'entraînement (6a, 6b) extérieur et intérieur et les ressorts d'entraînement (6a, 6b) extérieurs et intérieurs possèdent des longueurs différentes, les ressorts d'entraînement extérieurs (6a) étant respectivement montés sur le pourtour extérieur de la structure formée par les masses (2x, 2y), alors que les ressorts d'entraînement intérieurs (6b) sont dirigés vers une masse voisine.

11. Micro-gyroscope selon une ou plusieurs des revendications 1 à 10, **caractérisé en ce que** les masses x (2x) sont orientées et entraînées dans la direction y et les masses y (2y) dans la direction x.

12. Micro-gyroscope selon une ou plusieurs des revendications 1 à 11, **caractérisé en ce que** les masses x et y (2x, 2y) sont respectivement montées sur un ressort central (8) au moyen d'un ressort de couplage (7).

13. Micro-gyroscope selon la revendication 12, **caractérisé en ce que** le ressort de couplage (7) est de configuration hélicoïdale, celui-ci étant rigide dans la direction tangentielle afin de transmettre les forces de couplage dans cette direction, et étant souple dans la direction radiale afin d'éviter les forces de déformation sur les masses x ou y (2x, 2y) z.

14. Micro-gyroscope selon une ou plusieurs des revendications 2 à 13, **caractérisé en ce qu'**une masse z (9) est à chaque fois montée au moyen de ressorts de liaison (10) respectivement sur une masse x ou une masse y (2x, 2y).

15. Micro-gyroscope selon la revendication 14, **caractérisé en ce que** les ressorts de liaison (10) sont montés sur un fléau (11), lequel est fixé essentiellement au centre sur la masse x ou y (2x, 2y) au moyen d'une embase de fléau (12).

16. Micro-gyroscope selon la revendication 4 et la revendication 15, **caractérisé en ce que** l'embase de fléau (12) et l'élément d'ancrage de fixation (5) de la masse x ou y (2x, 2y) sont dans l'alignement l'un de l'autre.

17. Micro-gyroscope selon une ou plusieurs des revendications 14 à 16, **caractérisé en ce que** les ressorts de liaison (10) associés à la masse x (2x) possèdent dans la direction x une flexibilité contrôlable et fléchissent à peine dans la direction y et z.

18. Micro-gyroscope selon une ou plusieurs des revendications 14 à 17, **caractérisé en ce que** les ressorts de liaison (10) associés à la masse y (2y) possèdent dans la direction y une flexibilité contrôlable et fléchissent à peine dans la direction x et z.

19. Micro-gyroscope selon une ou plusieurs des revendications 1 à 18, **caractérisé en ce que** le gyroscope est réalisé sous la forme d'un gyroscope 1 D, 2D ou, avec des masses z (9), d'un gyroscope 3D.
